Europäisches Patentamt

European Patent Office

Office européen des brevets

(19)

(11) Publication number: **0 132 333**
A2

(12) # EUROPEAN PATENT APPLICATION

(21) Application number: 84304556.8

(51) Int. Cl.⁴: **B 60 C 27/20**, B 60 C 27/16

(22) Date of filing: 04.07.84

(30) Priority: 06.07.83 GB 8318473

(71) Applicant: **Treadwell, Walter David, 17 Meadow Way, Melton Mowbray Leicestershire, LE13 1DT (GB)**

(43) Date of publication of application: 30.01.85
Bulletin 85/5

(72) Inventor: **Treadwell, Walter David, 17 Meadow Way, Melton Mowbray Leicestershire, LE13 1DT (GB)**

(84) Designated Contracting States: **AT BE CH DE FR GB IT LI LU NL SE**

(74) Representative: **Marshall, John Grahame SERJEANTS, 25 The Crescent King ST., Leicester LE16RX (GB)**

(54) Universal detachable mud-grips.

(57)     A series of linked plates of sufficient length to encompass a driven wheel of a conventional road vehicle is suitably designed to reduce ground pressure and increase traction when traversing a soft or slippery surface. The linked plates are fitted to any wheel of the vehicle without recourse to jacking or to removing or replacing the wheel, and can be secured in position on each wheel by a single joining device.

EP 0 132 333 A2

-1-

TITLE:

Universal Detachable Mud-Grips

DESCRIPTION:

This invention relates to facilitating the movement of motor vehicles on soft or slippery ground by use of detachable mud-grip treads on the driven wheels.

The majority of civilian motorised vehicles in use world-wide are equipped with tyred wheels of a design and pattern optimised for performance on hard or paved surfaces. Performance specification requires good traction on dry or wet hard surfaces, minimum rolling resistance, and good adhesion to enhance braking performance in all weather conditions. This general specification cannot attempt to encompass a requirement for high tractive power at low speeds on soft or, on slippery surfaces, although some vehicles designed for 'off-road' use may adopt a compromise tyre design utilising a deep, coarse tread pattern.

It is known to fit snow chains to vehicle wheels to improve traction on ice. Such claims are in use wrapped around the driven wheels of a vehicle and hooked in position, permitting the vehicle to be driven on icy roads with far less wheel spin than when using conventional tyres. It is also known to use snow tyres, which may be studded to improve traction. Neither of these expedients is of any practical benefit on soft ground.

The present invention provides a detachable mud-grip tread to assist normal road vehicles fitted with conventional tyres to traverse soft or slippery ground surfaces. The detachable tread according to the invention comprises a row of plates each pivotally linked to an adjacent plate in the row and each comprising a ground-engaging face presenting a deep tread pattern to the ground and a tyre-engaging face which extends partially around a tyre of the motor vehicle wheel in use to overlie at least a part of each of the side walls of the tyre, and releasable connecting means for establishing a pivotal connection between opposite end plates in the row when the row of plates has been positioned around a driven road wheel of the motor vehicle.

Each of the plates making up the tread of the invention is thus designed to span a conventional road tyre and

0132333

a sufficient number of such plates are linked together to encircle each driven wheel of the vehicle. Each plate carries a coarse, deep tread pattern on the outside, the inside surface being designed to provide grip for any conventional road tread pattern. The plate also gives suitable side location on the tyre. The plates are linked together in any suitable way as to allow sufficient flexibility for the wheel to be encircled, the whole assembly being affixed in position by means of a single releasable pin, clamp, or other simple joining device.

The invention functions by increasing the contact area between the driven wheels and the soft or slippery surface by a considerable factor, thus reducing ground pressure, and by providing on this increased area a deep, coarse tread pattern, which may if desired incorporate studs, to enhance traction.

The plates making up the tread of the invention may be moulded from any suitable plastics or hard rubber material. Injection-moulded thermoplastics materials have been found to be suitable, and in particular polypropylene has been used for treads intended primarily for use on mud or soft ground, and polyurethane for treads intended primarily for use on ice.

The tread is in use preferably applied quite loosely around the driven wheel. The shape of the tyre--engaging surface of each plate may be such that the plate provides a grip for the tyre, enabling a vehicle that is bogged down in mud or sand, for example, to be driven directly onto treads laid out in front of the driven wheels.

Advantageously the pivotal connections between adjacent plates are positioned between the tyre-engaging and ground-engaging faces at an intermediate location. This, coupled with a fairly loose fit of the tread around the wheel, encourages sufficient relative movement between adjacent plates immediately downstream of the zone of contact with the ground to make the plates self-cleaning, ejecting any mud and grass that may be picked up in the deep tread as the vehicle is moved.

It is not necessary for the tyre-engaging face of the plates to be in tight engagement with the side walls of the tyres. All that is necessary is that the plates should overlie the side walls for a distance sufficient to keep the treads on the vehicle wheels. Thus the plates may be wide enough to accept a tyre considerably wider than that actually on the vehicle with which the tread is used, and there is surprisingly no loss of performance. Indeed the treads have been found to be effective even on front-wheel-drive vehicles where the driven wheels are also the steering wheels. Steering is not impaired by the treads, at least for low speed off--the-road applications for which the treads of the invention have the greatest application.

One possible embodiment of the invention is now described by way of example referring to the accompanying drawings in which:

Figure 1 shows in perspective a possible design of a plate of the tread of the invention;

Figure 2 shows a series of such plates linked, together with the method of linking; and

Figure 3 shows how the series of linked plates is fitted to a tyred wheel.

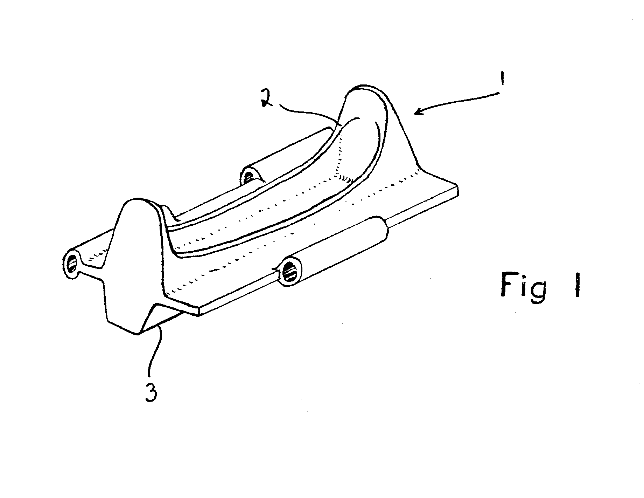

Referring to Figure 1, a semi-rigid plate 1 of suitable dimensions has on its upper surface 2 ridges which provide grip for a conventional tyre at normal pressure, the ridges being approximately shaped to the tyre profile and terminating in lugs to provide side-location. The under surface 3 carries a deep, coarse tread pattern to provide good traction on soft or slippery ground.

Figure 2 shows the method of assembly of such plates 1 into a length sufficient to encompass a driven wheel, the plates being pivotally joined by the insertion of a single pin 5 between each pair of adjacent plates.

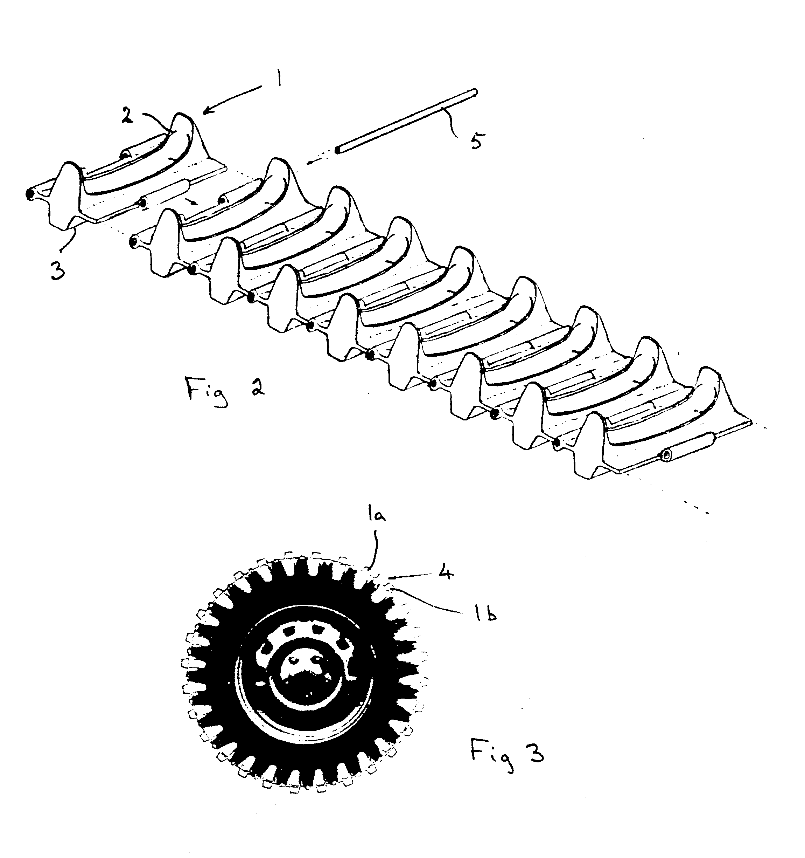

In use when it is required to cross soft or slippery ground, a series of linked plates 1 as in Figure 2 is laid in front of (or behind) each driven wheel and the vehicle is driven forward (or reversed) onto the plates. The two end plates 1a, 1b of the series of linked plates 1 are then brought together and fixed in position by inserting a single pin 5 which has an extension fashioned into a finger grip or handle to join the two ends as shown in Figure 3. The vehicle can then be driven slowly over the soft or slippery surface.

On reaching firm ground, the removable retaining pin 5 is withdrawn and the vehicle driven or reversed off the tread. In order to adapt the invention to suit larger or smaller wheels, plates may be added or removed as necessary as illustrated in Figure 2.

CLAIMS:

1. A detachable tread for a driven wheel of a motor vehicle, characterized in that the tread comprises a row of plates (1) each pivotally linked to an adjacent plate (1) in the row and each comprising a ground-engaging face (3) presenting a deep tread pattern to the ground and a tyre-engaging face (2) which extends partially around a tyre of the motor vehicle wheel in use to overlie at least a part of each of the side walls of the tyre, and releasable connecting means (4) for establishing a pivotal connection between opposite end plates (1a,1b) in the row when the row of plates has been positioned around a driven road wheel of the motor vehicle.

2. A detachable tread according to claim 1, wherein the plates are injection-moulded from a thermoplastic material.

3. A detachable tread according to claim 2, wherein the plates are made from polyurethane or polypropylene.

4. A detachable tread according to claim 1, wherein the plates are moulded from a hard rubber material.

5. A detachable tread according to any preceding claim, wherein the tyre-engaging face (2) is ridged in a direction parallel to the axis of the motor vehicle wheel to increase the grip of the wheel on the tread.

6.   A detachable tread according to any preceding claim, wherein each plate (1) is pivotally linked to its adjacent plates by a pivot pin (5) intermediate the ground-engaging face (3) and the tyre-engaging face (2) of the plate, so that flexure of the row of plates in use causes alternate spreading and closing of the tread pattern presented by the ground-engaging faces of the plates.

7.   A detachable tread according to any preceding claim, wherein the ground-engaging faces of the plates are provided with metal studs for added traction on slippery surfaces.

8.   A detachable tread according to any preceding claim, wherein the pivotal linkages (5) between adjacent plates are removable so that the total length of the row can be varied to suit different sizes of tyre.

Fig 1

Fig 2

Fig 3